Europäisches Patentamt

European Patent Office

Office européen des brevets

(11) Veröffentlichungsnummer : **0 455 938 B1**

## (12) EUROPÄISCHE PATENTSCHRIFT

(45) Veröffentlichungstag der Patentschrift :
**30.11.94 Patentblatt 94/48**

(21) Anmeldenummer : **91101396.9**

(22) Anmeldetag : **02.02.91**

(51) Int. Cl.⁵ : **G05B 11/16, G05B 13/02**

(54) Lernfähiger Zweipunktregler.

(30) Priorität : **11.05.90 CH 1607/90**

(43) Veröffentlichungstag der Anmeldung :
**13.11.91 Patentblatt 91/46**

(45) Bekanntmachung des Hinweises auf die
Patenterteilung :
**30.11.94 Patentblatt 94/48**

(84) Benannte Vertragsstaaten :
**CH DE DK FR GB LI NL SE**

(56) Entgegenhaltungen :
**EP-B- 0 128 491**

(56) Entgegenhaltungen :
**CONTROL vol. 11, no. 103, Januar 1967, Seiten
39 - 40; J.LOWEN SHEARER ET
AL.:"LEARNING CONTROL SYSTEMS"
REVUE A TIJDSCHRIFT. vol. 13, no. 2, April
1971, BRUXELLES BE Seiten 49 - 52;J. VAN
REUSEL: "LEARNING AND SELF-LEARNING
IN ADAPTIVE CONTROL SYSTEMS"**

(73) Patentinhaber : **Landis & Gyr Business
Support AG
CH-6301 Zug (CH)**

(72) Erfinder : **Michalek, Jan
Kirchgasse 11
CH-8907 Wettswil (CH)**

(74) Vertreter : **Müller, Hans-Jürgen, Dipl.-Ing. et al
Müller, Schupfner & Gauger
Postfach 10 11 61
D-80085 München (DE)**

EP 0 455 938 B1

## Beschreibung

Die Erfindung bezieht sich auf einen lernfähigen Zweipunktregler gemäß dem Oberbegriff des Anspruchs 1.

Solche lernfähigen Zweipunktregler eignen sich beispielsweise zur Regelung von Prozessen, deren Kenngrößen im voraus nicht bekannt sind und bei denen binär wirkende Stellglieder verwendet werden.

Ein lernfähiger Zweipunktregler der im Oberbegriff des Anspruchs 1 genannten Art ist aus der DE-OS 34 18 501 bzw. EP-B1-0 128 491 bekannt. Dieser besitzt eine Parameterschätzeinrichtung. Mittels bekannter Methoden zur parametrischen Modellbildung wird dabei ein Prozeßmodell bestimmt, das zum Einstellen der im Sinne eines Gütekriteriums optimalen Regelstrategie verwendet wird. Die Parameterschätzeinrichtung arbeitet nach der bekannten Methode der kleinsten Fehlerquadrate. Das gewonnene Prozeßmodell wird zur Vorhersage von Regelgrößenverläufen verwendet. Der apparative Aufwand für einen solchen Regler ist erheblich, weil zwei alternativ arbeitende Regeleinrichtungen mit je einem Prädiktor und je einer Bewertungseinrichtung und eine Parameterschätzeinrichtung vorhanden sein müssen.

Der Erfindung liegt die Aufgabe zugrunde, einen lernfähigen Zweipunktregler zu schaffen, dessen apparativer Aufwand erheblich kleiner ist.

Die genannte Aufgabe wird erfindungsgemäß durch die Merkmale des Anspruchs 1 gelöst. Vorteilhafte Ausgestaltungen ergeben sich aus den Unteransprüchen.

Nachfolgend wird ein Ausführungsbeispiel der Erfindung anhand der Zeichnung näher erläutert.

Es zeigen

Fig. 1 ein Schema eines Reglers und

Fig. 2 eine Zustandstrajektorie.

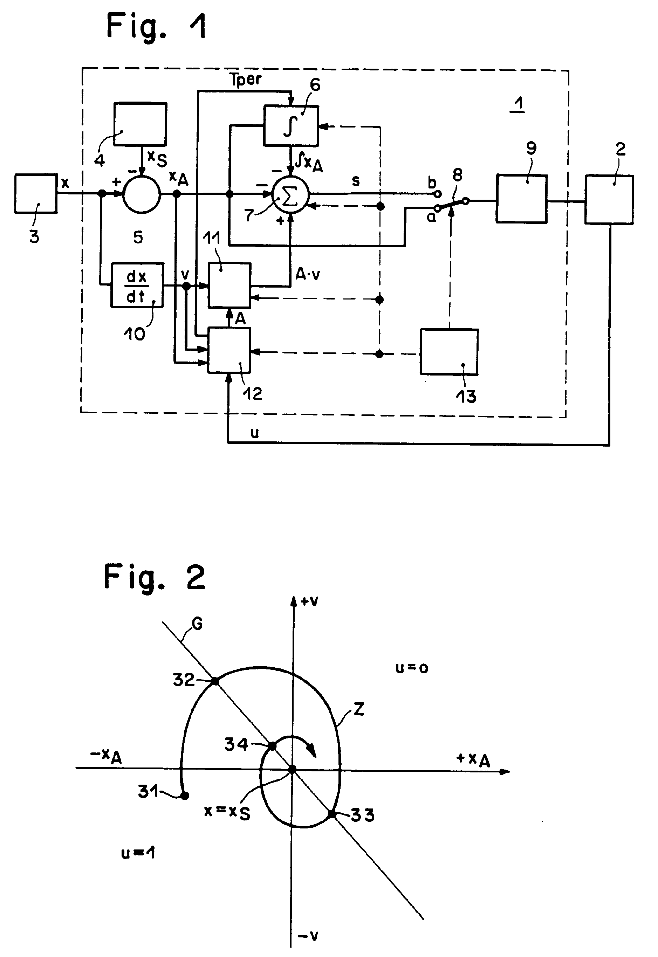

In der Fig. 1 ist mit 1 ein Regler bezeichnet, der eine binär wirkende Stelleinrichtung 2 betätigt. Der Istwert x der Regelgröße wird mit Hilfe einer Meßeinrichtung 3 gemessen und an den Regler 1 zurückgemeldet.

Der Regler 1 umfaßt einen Sollwertgeber 4, der vorzugsweise einstellbar ist. Der Sollwert $x_S$ des Sollwertgebers 4 und der Istwert x der Meßeinrichtung 3 gelangen auf einen Vergleicher 5, der aus diesen beiden Signalen die Regelabweichung $x_A$ bildet. Die Regelabweichung $x_A$ gelangt einerseits auf einen Integrator 6, andererseits auf einen Summierer 7 und außerdem zu einem zwei Stellungen a und b aufweisenden Umschalter 8. In einer ersten Stellung a des Umschalters 8 gelangt die Regelabweichung $x_A$ auf einen Komparator 9. Ist die Regelabweichung $x_A$ größer oder gleich Null, geht der Ausgang des Komparators 9 in einen von zwei möglichen Zuständen, und ist die Regelabweichung $x_A$ kleiner Null, geht der Ausgang des Komparators 9 in den anderen Zustand. Von diesem Komparator 9 wird die Stelleinrichtung 2 angesteuert, wobei die Stelleinrichtung 2 eine zweiwertige Stellgröße u erzeugt, also beispielsweise "EIN" und "AUS". Damit wird der Prozeß direkt gesteuert.

Der Istwert x der Regelgröße gelangt außerdem auf ein Differenzierglied 10, in dem die zeitliche Ableitung v des Istwertes x bestimmt wird. Die Ableitung v wird einem Rechenglied 11 und einer Schätzeinrichtung 12 zugeführt. Der Schätzeinrichtung 12 werden außerdem noch die Regelabweichung $x_A$ und die Stellgröße u zugeführt.

Zur Bestimmung der Ableitung v kann man vorteilhaft eine Anzahl n zurückliegender Abtastpunkte der Istwerte x betrachten. Es wird die Neigung jener Geraden bestimmt, für die die Summe der Fehlerquadrate der Abweichung in den n Abtastpunkten minimal wird.

Ein Betriebsartenumschalter 13 wirkt auf den Umschalter 8, auf den Integrator 6, auf den Summierer 7, auf das Rechenglied 11 und auf die Schätzeinrichtung 12 ein.

Der Integrator 6 integriert die Regelabweichung $x_A$, bildet also das Integral der Regelabweichung $x_A$. Dieses Signal wird dem Summierer 7 zugeführt.

Die Schätzeinrichtung 12 weist drei Eingänge auf, an denen die Regelabweichung $x_A$, die Ableitung v und die von der Stelleinrichtung 2 gelieferte Stellgröße u anstehen, und ermittelt aus diesen drei Größen die Neigung A einer Schaltgeraden G, deren Größe an einem Ausgang zur Verfügung steht, der mit einem zweiten Eingang des Rechenglieds 11 verbunden ist. Die Schaltgerade G ist der funktionelle Zusammenhang zwischen der Regelabweichung $x_A$ und der zeitlichen Ableitung v (Fig. 2).

Zur Bestimmung der Neigung A der Schaltgeraden G kann man vorteilhaft eine Anzahl m zurückliegender Schaltpunkte betrachten, an den die Stellgröße u von 0 auf 1 oder von 1 auf 0 wechselt. Für jeden Schaltpunkt sind die zugehörigen Extremwerte (Minimum und Maximum) der Abweichung zwischen Sollwert $x_S$ und Istwert x und die zugehörige Ableitung v bekannt. Es wird die Neigung A jener Schaltgeraden G bestimmt, für die die Summe der Fehlerquadrate der Abweichung in den m Schaltpunkten minimal wird.

Außerdem ermittelt die Schätzeinrichtung 12 vorteilhaft eine Schwingungsperiode $T_{per}$ der annähernd sinusförmigen Schwingungsperiode der Regelabweichung $x_A$. Diese Schwingungsperiode $T_{per}$ berechnet sich zu $T_{per} = - 2 \cdot \pi \cdot A$. Die Schwingungsperiode $T_{per}$ kann vorteilhaft als Nachstellzeit für den Integrator 6 verwendet werden. Die Größe der Schwingungsperiode $T_{per}$ steht an einem weiteren Ausgang der Schätzeinrichtung 12 zur Verfügung, der mit einem weiteren Eingang des Integrators 6 verbunden ist.

Falls eine bleibende Regelabweichung tolerierbar ist, kann auf den Integrator 6 verzichtet werden. Ist der Integrator 6 vorhanden, wird dadurch der Mittelwert der Regelabweichung $x_A$ zu Null ausgeregelt.

Das Rechenglied 11 berechnet aus der Neigung A und der Ableitung v einen Schaltpunkt A·v auf der Schaltgeraden G. Dieser Wert steht an einem Ausgang zur Verfügung, der mit einem dritten Eingang des Summierers 7 verbunden ist.

Der Summierer 7 bildet jeweils die Summe s aus den drei an seinen Eingängen anliegenden Werten, nämlich dem Schaltpunkt A·v, der Regelabweichung $x_A$ und dem Integral von $x_A$. Dabei haben Regelabweichung $x_A$ und das Integral von $x_A$ negatives Vorzeichen, so daß der Summierer 7 die Summe s als

$$s = A \cdot v + (-x_A) + (-\text{Integral von } x_A)$$

bildet. Dieses Signal gelangt dann, wenn sich der Umschalter 8 in seiner zweiten Stellung b befindet, auf den Komparator 9.

Für die grundlegende Funktion des Reglers 1 ist wie erwähnt der Integrator 6 verzichtbar. Ohne diesen Integrator wird vom Summierer 7 die Summe $s = A \cdot v + (-x_A)$ gebildet. Dann hat der Regler 1 überwiegend PD-Verhalten. Ist der Integrator 6 vorhanden, dann hat der Regler 1 durch den zusätzlichen I-Anteil überwiegend PID-Verhalten. Ob der Regler 1 den Integrator 6 enthält oder nicht, ist je nach Anwendung des Reglers 1 vom zu regelnden Prozeß abhängig, je nachdem, ob der Prozeß einen Regler mit PD- oder PID-Verhalten erfordert. Der Einbezug des Integrators 6 ist also eine vorteilhafte Ausgestaltung des Reglers 1, um Prozesse optimal regeln zu können, deren Regelstrecke höher als zweiter Ordnung ist.

Nach der vorangegangenen Beschreibung von Aufbau und grundsätzlicher Funktionsweise der einzelnen Elemente wird nun nachfolgend die Gesamtfunktion beschrieben. Befindet sich der Umschalter 8 in der Stellung a, wie dies der Fig. 1 entspricht, so ist der Regler 1 lernfähig. Diese Stellung wird als Lernbetrieb bezeichnet. Befindet sich der Umschalter 8 in der Stellung b, so regelt der Regler 1 nach den gelernten Daten. Diese Stellung wird als Normalbetrieb bezeichnet.

Im Lernbetrieb, der am Betriebsartenumschalter 13 eingestellt wird, steuert dieser den Schalter 8 in die Stellung a und setzt den Integrator 6, den Summierer 7 und das Rechenglied 11 außer Betrieb. Dagegen wird die Schätzeinrichtung 12 aktiviert.

Für die nachfolgende Beschreibung ist die Annahme getroffen, der zu regelnde Prozeß sei eine Heizung, bei der die Temperatur eines Raumes zu regeln ist und die Heizung sei bei der Stellgröße u=0 ausgeschaltet und bei der Stellgröße u=1 eingeschaltet. Es wird weiter angenommen, die Regelabweichung $x_A$ sei negativ, d. h. der Istwert x sei momentan kleiner als der Sollwert $x_S$, und die Stellgröße u sei 1, d. h. die Heizung sei eingeschaltet. Der Betrieb der Heizung führt nun dazu, daß die Temperatur, also der Istwert x, steigt. In dem Moment, da die Regelabweichung $x_A$ positiv wird, schaltet der Komparator 9 um, wodurch die Stelleinrichtung 2 betätigt wird und die Stellgröße u von 1 auf 0 wechselt. Die Heizung wird also abgeschaltet. Ausgelöst durch den signalwechsel der Stellgröße u speichert nun die Schätzeinrichtung 12 den im Umschaltmoment aktuellen Wert der Ableitung v.

Wegen der Trägheit der Regelstrecke wird nun die Temperatur weiter steigen. Sobald die Ableitung v den Wert 0 erreicht, wenn also die höchste Temperatur und damit die größte Regelabweichung $x_{Amax}$ erreicht ist, berechnet nun die Schätzeinrichtung 12 einen neuen Schätzwert für die Neigung A der Schaltgeraden G aus der Regelabweichung $x_{Amax}$ und der zuvor gespeicherten Ableitung v sowie aus den weiter zurückliegenden Wertepaaren für $x_{Amax}$ und v. Bei der Berechnung der Schätzwerte kommt eines der bekannten Parameter-Schätzverfahren zum Einsatz, z.B. die Methode der kleinsten Fehlerquadrate. Vorteilhaft gegenüber dem Stand der Technik ist, daß nur ein einziger Parameter aus Paaren von lediglich zwei Werten berechnet werden muß, was die Realisierung der Schätzeinrichtung 12 sehr vereinfacht.

Beim nachfolgenden Abfall des Istwertes x wird analog dazu in dem Moment, da die Regelabweichung $x_A$ wieder negativ wird, durch den Komparator 9 die Stelleinrichtung 2 wieder umgeschaltet, so daß die Stellgröße u wieder auf 1 wechselt. In diesem Moment wird die Größe der Ableitung v von der Schätzeinrichtung 12 gespeichert. Wegen der Trägheit der Regelstrecke wird der Istwert x zunächst weiter fallen, bis die Regelabweichung $x_A$ ihr Minimum $x_{Amin}$ erreicht hat. Beim Erreichen dieses Minimums ist die Ableitung v wiederum 0. In diesem Moment wird nun wiederum durch die Schätzeinrichtung 12 eine neue Parameterschätzung vorgenommen.

Dieser Zyklus wiederholt sich. Es werden also fortlaufend neue Parameterschätzungen von der Schätzeinrichtung 12 vorgenommen.

Nun wird, ausgelöst durch den Betriebsartenumschalter 13, die Umschaltung vom Lernbetrieb in den Normalbetrieb vorgenommen. Vor der Umschaltung wird aus dem zuletzt geschätzten Wert der Neigung A die als Nachstellzeit des Integrators 6 dienende Schwingungsperiode $T_{per}$ berechnet.

Durch die Umschaltung in den Normalbetrieb nimmt der Umschalter 8 die Stellung b ein und gleichzeitig werden das Rechenglied 11, der Summierer 7 und gegebenfalls auch der Integrator 6 aktiviert, während die Schätzeinrichtung 12 nicht mehr aktiviert ist. Der Betriebsartenumschalter 13 kann manuell oder auch automatisch verstellbar sein. Für die automatische Verstellung sind verschiedene Auslösekriterien vorstellbar. So ist es möglich, daß nach einer vorgebbaren Anzahl von Schaltzyklen der Betriebsartenumschalter 13 automatisch umgeschaltet wird. Es ist aber z.B. auch möglich, die Umschaltung als Funktion des Schätzfehlers der Schätzeinrichtung 12 auszulösen.

Im Normalbetrieb wird nun die Regelabweichung $x_A$ nicht mehr direkt auf den Komparator 9 geleitet. Der Komparator 9 erhält stattdessen das Signal der Summe s, die vom Summierer 7 gebildet wird. Damit schaltet der Komparator 9 nicht allein in Funktion der Regelabweichung $x_A$, sondern in Funktion der Summe $s = A \cdot v + (-x_A) + (-\text{Integral von } x_A)$ bzw. $s = A \cdot v + (-x_A)$, falls kein Integrator 6 vorhanden ist. Der Term $A \cdot v$ ist ein Punkt auf der Schaltgeraden G.

Aus dem Wert der Steigung A der Schaltgeraden G, die aus der vorhergehenden Schätzung hervorgegangen ist, und dem Wert der Ableitung v berechnet das Rechenglied 11 einen Punkt $A \cdot v$. Von diesem Wert $A \cdot v$ wird nun im Summierer 7 der Wert der Regelabweichung und gegebenenfalls auch der Wert des Integrals von $x_A$ abgezogen. Damit schaltet der Komparator 9 nicht mehr bei $x_A=0$, sondern bei einem davon verschiedenen Wert. Dies sei nun anhand der Fig. 2 erläutert.

Die Fig. 2 zeigt die Lage der Schaltgeraden G, deren Steigung A von der Schätzeinrichtung 12 zuvor ermittelt worden ist, in einem Koordinatensystem mit der Abszissenachse $x_A$ und der Ordinatenachse v. Der Ursprung dieses Koordinatensystems ($x_A=0$; $v=0$) entspricht dem Sollwert $x_S$, denn für $x_A=0$ ist $x=x_S$. Durch Ursprung läuft die Schaltgerade G. Damit ist die Schaltgerade G eindeutig bestimmt. Das Feld links der Schaltgeraden G ist gekennzeichnet durch die Stellgröße $u=1$, das Feld rechts der Schaltgeraden G durch die Stellgröße $u=0$. Eingezeichnet ist eine Zustandstrajektorie Z einer Tiefpassregelstrecke zweiter Ordnung.

Ausgehend von einem bestimmten Zustand des Reglers 1 und des zu regelnden Prozesses sei ein Zustand angenommen, der durch den Punkt 31 gekennzeichnet ist. Die Regelabweichung $x_A$ ist negativ, die Stellgröße u dabei gleich 1. Der Istwert steigt nun mit zunehmender Änderung v. Gleichzeitig wird die Regeldifferenz $-x_A$ kleiner. Erreicht nun die Zustandstrajektorie Z die Schaltgerade G (Punkt 32), so schaltet der Komparator 9 um. Damit wird die Stellgröße u gleich 0. Die Heizung ist nun abgeschaltet. Wegen der Trägheit des Prozesses wird zwar nicht der Istwert x sofort kleiner, aber die Ableitung v nimmt nun ab. Wegen einer Totzeit im Prozeß kann sie aber zunächst noch kurzzeitig zunehmen. Gleichzeitig ändert sich wegen der weiteren Zunahme des Istwertes x die Regelabweichung $x_A$ zu grösseren Werten, überschreitet den Wert 0 und wird positiv. Die Ableitung v wird kleiner, wird zu 0 und anschließend negativ. Nun fällt auch der Istwert x und gleichzeitig die Regelabweichung $x_A$. Sodann wird die Zustandstrajektorie Z wiederum die Schaltgerade G erreichen (Punkt 33). In diesem Moment wird der Komparator 9 wieder umschalten, so daß die Stellgröße u nun wieder 1 wird. Es ist erkennbar, daß der Punkt 33 näher am sollwert $x_S$ liegt als der Punkt 32. Der anschließende Schaltpunkt 34 liegt nochmals näher am Sollwert $x_S$. Die Zustandstrajektorie Z nähert sich somit immer weiter dem Sollwert $x_S$.

Die vorstehende Beschreibung der Vorgänge anhand der Fig. 2 gilt für einen Regler 1 ohne Integrator 6. Ist der Integrator 6 vorhanden, so findet die Umschaltung nicht auf der Schaltgeraden G selbst statt, sondern auf einer zu ihr parallelen Geraden, die die Abszissenachse in einem Punkt schneidet, dessen Abstand vom Ursprung gleich dem Wert $-1/T_{per} \cdot (\text{Integral von } x_A)$ ist. Damit wird in vorteilhafter Weise die verbleibende dauernde Regelabweichung eines P-Reglers durch einen I-Anteil korrigiert.

Während bei dem vorstehend beschriebenen Regler 1 zwischen dem Lernbetrieb und dem Normalbetrieb unterschieden worden und zur Umschaltung zwischen diesen beiden Betriebsarten der Betriebsartenumschalter 13 und der Umschalter 8 vorgesehen ist, ist bei einer weiteren Ausführungsform eines solchen Reglers keine Unterscheidung zwischen Lern- und Normalbetrieb vorgesehen. Bei einem solchen Ausführungsbeispiel fehlen gegenüber dem Regler 1 der Fig. 1 der Betriebsartenumschalter 13 und der Umschalter 8, ebenso die Verbindung vom Ausgang des Vergleichers 5 zum Umschalter 8. Der Ausgang des Summierers 7, der das Signal s führt, ist direkt auf den Eingang des Komparators 9 geführt. Außerdem sind Summierer 7, Rechenglied 11, Schätzeinrichtung 12 und gegebenenfalls auch Integrator 6 dauernd aktiv.

Bei einem so ausgebildeten Regler 1 findet das Schätzen der Neigung A der Schaltgeraden G ebenso dauernd statt wie das Verarbeiten der geschätzten Neigung A zu den Werten $A \cdot v$, s und gegebenenfalls auch $T_{per}$. Dies ist vor allem dann vorteilhaft, wenn es gilt, zeitvariante Prozesse optimal zu regeln.

Es ist bei einem solchen Regler auch nicht erforderlich, von einem berechneten oder auf Erfahrungswerten beruhenden ersten Wert für die Neigung A auszugehen, wenn der Regler einen Prozeß erstmalig regeln soll. Bei Inbetriebnahme wird für die Neigung A der Schaltgeraden G ein Wert von 0 angenommen. Da die Regelabweichung $x_A$ negativ ist, befindet sich der Startpunkt 31 gemäß Fig. 2 links der Schaltgeraden G, so daß die Stellgröße $u=1$ sein muß. Der Regler benötigt also außer der Vorgabe des Sollwertes $x_S$ keinerlei Einstellarbeiten. Die Regelungsgüte beim ersten Schaltzyklus läßt sich jedoch verbessern, wenn ein Anfangswert für die Neigung A vorgegeben ist. Ein solcher Wert kann in die Schätzeinrichtung 12 eingebbar oder in ihr unverlierbar gespeichert sein.

**Patentansprüche**

1. Lernfähiger Zweipunktregler (1) mit einem Sollwertgeber (4), einem dem Vergleich von Istwert (x) und Sollwert ($x_S$) der Regelgröße dienenden Vergleicher (5), einer Schätzeinrichtung (12), mindestens einer Bewertungseinrichtung (6, 7, 11) und einem eine Stelleinrichtung (2) steuernden Komparator (9), wobei die Stelleinrichtung (2) eine zweiwertige Stellgröße (u) bildet, dadurch gekennzeichnet,
   - daß ein Differenzierglied (10) vorhanden ist, das die zeitliche Ableitung (v) des Istwerts (x) der Regelgröße bildet,
   - daß die Schätzeinrichtung (12) aus der Regelabweichung ($x_A$), der zeitlichen Ableitung (v) und der Stellgröße (u) nach einem Parameterschätzverfahren eine Neigung (A) einer Schaltgeraden (G) für die Stellgröße (u) bestimmt,
   - daß die Bewertungseinrichtung ein Rechenglied (11) und einen Summierer (7) aufweist,
   - daß das Rechenglied (11) aus der Neigung (A) der Schaltgeraden (G) und der zeitlichen Ableitung (v) einen Schalt-Punkt (A·v) auf der Schaltgeraden (G) bestimmt, und
   - daß der Summierer (7) aus dem Schalt-Punkt (A·v) und der Regelabweichung ($x_A$) eine Summe (S) = A·v + (-$x_A$) bildet, die dem Komparator (9) zuführbar ist.

2. Zweipunktregler nach Anspruch 1, dadurch gekennzeichnet, daß die Neigung (A) der Schaltgeraden (G) in der Schätzeinrichtung (12) dadurch bestimmbar ist, daß für eine Anzahl m zurückliegender Schaltpunkte aus den jeweiligen Abweichungen von Sollwert ($x_S$) und Istwert (x) der Regelgröße und den zugehörigen Ableitungen (v) jene Gerade berechnet wird, für die die Summe der Fehlerquadrate der Abweichung in den m Schaltpunkten minimal wird.

3. Zweipunktregler nach Anspruch 1 oder 2, dadurch gekennzeichnet, daß die Ableitung (v) des Istwerts (x) der Regelgröße im Differenzierglied (10) dadurch bestimmbar ist, daß für eine Anzahl n zurückliegender Abtastpunkte des Istwerts (x) die Neigung jener Geraden berechnet wird, für die die Summe der Fehlerquadrate der Abweichung in den n Abtastpunkten minimal wird.

4. Zweipunktregler nach einem der Ansprüche 1 bis 3, dadurch gekennzeichnet, daß die Bewertungseinrichtung einen Integrator (6) zum Integrieren der Regelabweichung ($x_A$) aufweist, dessen Ausgang mit einem subtrahierenden Eingang des Summierers (7) verbunden ist.

5. Zweipunktregler nach Anspruch 4, dadurch gekennzeichnet, daß die Schätzeinrichtung (12) eine Schwingungsperiode $T_{per}$ der Sollwertabweichung ($x_A$) gemäß der Beziehung $T_{per}$ = -2·$\pi$·A bestimmt und daß diese Schwingungsperiode ($T_{per}$) die Nachstellzeit für den Integrator (6) ist.

6. Zweipunktregler nach einem der Ansprüche 1 bis 5, dadurch gekennzeichnet, daß ein Anfangswert für die Neigung (A) der Schaltgeraden (G) in die Schätzeinrichtung (12) eingebbar ist.

**Claims**

1. A two-point regulator (1) which is capable of learning comprising a reference value generating means (4), a comparator (5) serving to compare the actual value (x) and the reference value ($x_S$) of the regulating parameter, an estimating means (12), at least one evaluation means (6, 7, 11) and a comparator device (9) for controlling a control device (2), wherein the control device (2) forms a two-valued control value (u), characterised in that
   - there is provided a differentiating member (10) which forms the time derivation (v) of the actual value (x) of the regulating parameter,
   - the estimating means (12) determines an inclination (A) of a switching straight line (G) for the control value (u) from the regulation deviation ($x_A$), the time derivation (v) and the control value (u) in accordance with a parameter estimating process,
   - the evaluation means has a computing member (11) and a summing means (7),
   - the computing member (11) determines a switching point (A·v) on the switching straight line (G) from the inclination (A) of the switching straight line (G) and the time derivation (v), and

- the summing means (7) forms from the switching point (A·v) and the regulation deviation ($x_A$) a sum (S) = A·v + (-$x_A$), which can be fed to the comparator device (9).

2. A two-point regulator according to claim 1 characterised in that the inclination (A) of the switching straight line (G) can be determined in the estimating means (12) by a procedure whereby for a number m of past switching points that straight line for which the sum of the error squares of the deviation in the m switching points becomes a minimum is calculated from the respective deviations of the reference value ($x_S$) and the actual value (x) of the regulating parameter and the associated derivations (v).

3. A two-point regulator according to claim 1 or claim 2 characterised in that the derivation (v) of the actual value (x) of the regulating parameter can be determined in the differentiating member (10) by a procedure whereby for a number n of past sampling points of the actual value (x) the inclination of that straight line for which the sum of the error squares of the deviation in the n sampling points becomes a minimum is calculated.

4. A two-point regulator according to one of claims 1 to 3 characterised in that the evaluation means has an integrator (6) for integrating the regulation deviation ($x_A$), the output of which is connected to a subtracting input of the summing means (7).

5. A two-point regulator according to claim 4 characterised in that the estimating means (12) determines an oscillation period $T_{per}$ of the reference value deviation ($x_A$) in accordance with the relationship $T_{per} = -2 \cdot \pi \cdot A$ and that said oscillation period $T_{per}$ is the integral-action time for the integrator (6).

6. A two-point regulator according to one of claims 1 to 5 characterised in that an initial value for the inclination (A) of the switching straight line (G) can be inputted into the estimating means (12).


**Revendications**

1. Régulateur à deux niveaux adaptatif (1) comportant un générateur de valeur de consigne (4), un comparateur (5) servant à la comparaison d'une valeur réelle (x) et d'une valeur de consigne ($x_S$) de la grandeur de régulation, un dispositif d'évaluation (12), au moins un dispositif d'estimation (6,7,11) et un comparateur (9) comportant le dispositif d'actionnement (2), ce dispositif d'actionnement (2) établissant une grandeur d'actionnement (u) à deux valeurs, caractérisé en ce que:
   - il est prévu un organe de différenciation (10), qui établit la dérivée temporelle (v) de la valeur réelle (x) de la grandeur de régulation,
   - le dispositif d'évaluation (12) détermine, à partir de l'écart de régulation ($x_A$), de la dérivée temporelle (v) et de la grandeur d'actionnement (u), par un procédé d'évaluation de paramètres, une pente (A) d'une droite de commutation (G) pour la grandeur d'actionnement (u),
   - le dispositif d'estimation comporte un organe de calcul (11) et un sommateur (7),
   - l'organe de calcul (11) détermine à partir de la pente (A) de la droite de commutation (G) et de la dérivée temporelle (v) un point de commutation (A.v) sur la droite de commutation (G), et
   - le sommateur (7) établit, à partir du point de commutation (A.v) et de l'écart de régulation ($x_A$), une somme (S) = A.v + (-$x_A$), qui peut être transmise au comparateur (9).

2. Régulateur à deux niveaux selon la revendication 1, caractérisé en ce que la pente (A) de la droite de commutation (G) peut être déterminée dans le dispositif d'évaluation (12) par le fait que, pour un nombre (m) de points de commutation antérieurs, il se produit à partir des écarts correspondants entre la valeur de consigne ($x_S$) et une valeur réelle (x) de la grandeur de régulation et à partir des dérivées associées (v), un calcul d'une droite pour laquelle la somme des carrés d'erreurs de l'écart sera minimale pour les m points de commutation.

3. Régulateur à deux niveaux selon la revendication 1 ou 2, caractérisé en ce que la dérivée activée de la valeur réelle (x) de la valeur de régulation peut être déterminée dans l'organe de différenciation 10 par le fait, pour un nombre (n) de points d'analyse antérieurs de la valeur réelle (x), il se produira un calcul de la pente d'une droite pour laquelle la somme des carrés d'erreurs de l'écart sera minimale pour les n points d'analyse.

4. Régulateur à deux niveaux selon l'une des revendications 1 à 3, caractérisé en ce que le dispositif d'estimation comporte un intégrateur (6) pour effectuer l'intégration de l'écart de régulation ($x_A$), la sortie de cet intégrateur étant reliée à une entrée soustractive du sommateur (7).

5. Régulateur à deux niveaux selon la revendication 4, caractérisé en ce que le dispositif d'évaluation (12) détermine une période d'oscillation ($T_{per}$) de l'écart de régulation ($x_A$) conformément à la relation $T_{per} = -2 \pi A$ et en ce que cette période d'oscillation ($T_{per}$) représente le temps de réglage correctif pour l'intégrateur (6).

6. Régulateur à deux niveaux selon l'une des revendications 1 à 5, caractérisé en ce qu'une valeur initiale de la pente (A) de la droite de commutation (G) peut être introduite dans le dispositif d'évaluation (12).

# Fig. 1

# Fig. 2